# EUROPEAN PATENT SPECIFICATION

(11) **EP 4 467 339 B1**
(45) Date of publication and mention of the grant of the patent: **25.02.2026**
(21) Application number: 24177780.4
(22) Date of filing: 23.05.2024
(51) Int. Cl.: B32B 37/10, B32B 37/12, B32B 38/18, B32B 17/10

(54) **COMPOUND CURVE COMPONENT LAMINATION METHOD**
VERBUNDKURVENKOMPONENTENLAMINIERUNGSVERFAHREN
PROCÉDÉ DE STRATIFICATION DE COMPOSANT COURBE COMPOSITE

(30) Priority: 23.05.2023 US 202318200824
(43) Date of publication of application: 27.11.2024
(73) Proprietor: Rockwell Collins, Inc., Cedar Rapids, IA 52498 (US)
(72) Inventor: MCCALLEY, Cameron, Marion, IA (US); SAMPICA, James D., Anamosa, IA (US)
(74) Representative: Dehns

(56) References cited:
- EP-A1- 3 588 183
- WO-A1-2021/105879
- US-A1- 2010 282 416

## Description

### TECHNICAL FIELD AND BACKGROUND

The present disclosure relates generally to optical bonding technology, and more particularly, to methods of direct dry film (DDF) laminating compound curve substrates and compound curve products produced by such methods.

Optical bonding is the process of bonding two or more optical components together using a clear optical index matched adhesive. Examples of components to be optically bonded include, but are not limited to, anti-reflective glass, protective glass, touch screens, ITO heaters, EMI shields, and additional displays. Components may be bonded to the front, rear, or both sides of a display or to another optical component. Optical bonding may also be used to produce aircraft canopies, automotive windshields, and other safety glass applications. Industries benefiting from optical bonding include, but are not limited to, military, avionics, ground vehicles, and automotive displays requiring very high optical and environmental performances.

Optical bonding technologies include dry optical bonding and liquid optical bonding. In some cases, dry optical bonding is preferred considering scalability, low environmental impact, dimensional superiority, and better performance. While dry optical bonding is ideal for planar and single axis curved substrates via cold forming and optically clear adhesive (OCA) application, current processes for applying dry adhesives to compound curve substrates is not possible. US 2010/282416 A1 discloses a three-dimensional curved substrate lamination.

EP 3 588 183 A1 discloses a method of laminating a surface of a flexible material to a surface of a rigid, curved material. The method includes pressing an area of the surface of the flexible material into the surface of the rigid, curved material with a holder to create a contact area while the flexible material is conformed to the holder, which has a curvature greater than a curvature of the rigid, curved material surface; and changing the contact area between the surface of the flexible material and the surface of the rigid, curved material while maintaining pressure on the contact area until the surface of the flexible material and the surface of the rigid curved material are laminated.

Therefore, what is needed is a solution for dry bonding compound curve substrates.

### BRIEF SUMMARY

The present invention is directed to a method of direct dry film (DDF) laminating a compound curve substrate, which is provided as defined by claim 1. According to the invention, the method includes providing a chamber including a bladder, positioning a frame in the chamber, and positioning a compound curve substrate in an interior space formed within the frame. The method continues by suspending, via the frame, an optically clear adhesive (OCA) sheet over the compound curve substrate, the OCA sheet including a top liner. The method continues with structurally altering the top liner at one or more locations corresponding to curvature of the compound curve substrate, evacuating the chamber to induce a vacuum, deploying the bladder to bring the OCA sheet into conformed contact with the compound curve substrate, retracting the bladder, and venting the chamber. In embodiments, the method continues with bonding a matched second substrate to the applied, bonded and conformed OCA sheet.

According to the invention, the OCA sheet further includes a bottom liner, and the method further includes removing the bottom liner before evacuating the chamber.

In some embodiments, structurally altering the top liner includes scoring the top liner.

In some embodiments, structurally altering the top liner includes cutting the top liner.

In some embodiments, the method further includes positioning the matched second substrate in the chamber, evacuating the chamber to induce a vacuum, deploying the bladder to bring the matched compound curve second substrate into conformed contact with the OCA sheet, retracting the bladder, and venting the chamber.

In some embodiments, the second substrate is a flexible film or a rigid compound curve substrate having a curvature profile matching a curvature profile of the first compound curve substrate.

In some embodiments, the method further includes, prior to bonding the second matched substrate to the OCA sheet, trimming the OCA sheet to the substrate edge or insert dimension, and removing the top liner.

In some embodiments, the OCA sheet is maintained in conformed contact with the compound curve substrate for a predetermined time period.

In some embodiments, the method further includes heating at least one of the chamber, the OCA sheet, and the compound curve substrate.

In some embodiments, the OCA sheet is coupled to the frame by a plurality of elastic members.

According to another aspect, however not encompassed by the wording of the claims, the present disclosure provides a laminated compound curve product including a compound curve substrate and a second substrate bonded together by an intermediate optically clear adhesive (OCA) sheet, wherein the laminated compound curve product is produced according to a method of direct dry film (DDF) lamination. In embodiments, the method includes providing a chamber including a bladder, positioning a frame in the chamber, and positioning the compound curve substrate in an interior space within the frame. The method continues with suspending, by the frame, the OCA sheet over the compound curve substrate, the OCA sheet including a top liner. The method continues by structurally altering the top liner at one or more locations corresponding to curvature of the compound curve substrate, evacuating the chamber to induce a vacuum, deploying the bladder to bring the OCA sheet into conformed contact with the compound curve substrate, retracting the bladder, and venting the chamber. In embodiments, the method continues by bonding the second substrate to the applied, bonded, and conformed OCA sheet.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a schematic cross-section of a compound curve product produced according to a dry bonding lamination method, in accordance with example embodiments of this disclosure;
FIG. 2 is a schematic illustration of tooling for implementing a direct dry film (DDF) lamination method, in accordance with example embodiments of this disclosure;
FIG. 3 is a schematic illustration of alternate tooling for implementing a DDF lamination method, in accordance with example embodiments of this disclosure;
FIGS. 4A-4D illustrate schematically the tooling and sequential steps for DDF laminating a bonded compound curve substrate, in accordance with example embodiments of this disclosure;
FIG. 5 is a schematic illustration of a structurally altered top liner of an OCA to introduce flexibility, in accordance with example embodiments of this disclosure; and
FIG. 6 is a flow diagram illustrating an example implementation of a method of DDF laminating compound curve products, in accordance with example embodiments of this disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways as long as within the scope of the invention as defined in claim 1. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to methods of dry bonding compound curve substrates and compound curve laminations produced according to such methods. In some embodiments, the lamination may be a direct dry film (DDF) lamination for applying a flexible adhesive layer to a rigid, compound curve substrate in a bonded stack, i.e., flexible-to-rigid lamination. In some embodiments, the lamination may be a DDF lamination for applying a rigid compound curve part to a compound curve substrate in a bonded stack, i.e., rigid-to-rigid lamination, wherein the rigid compound curve part and the rigid compound curve substrate having a matching curvature profile.

In embodiments, the optically clear adhesive (OCA) may be implemented in sheet form, i.e., "OCA sheet" as referred to herein, applied using an additional tooling piece in which the OCA sheet is suspended above/over the compound curve (i.e., non-planar and not single axis curved) substrate in the DDF chamber, with the bottom liner peeled and no contact made until a vacuum is achieved in the chamber. In some embodiments, the suspension may be achieved with a "picture frame" tool configured to span the shaped substrate and the support tooling. In embodiments, the top liner (i.e., liner provided on a top side of the OCA sheet facing away from the compound curve substrate) is scored, cut or otherwise altered to introduce flexibility into the sheet at strategic locations to allow the sheet to give way while the bottom liner above the part is removed to bring the adhesive into contact with the curved substrate. During the DDF process, a bladder serves to bring the OCA sheet into intimate contact across the full shape of the curved substrate. When the DDF process is complete, the prepared substrate is ready to have the OCA sheet trimmed, as necessary, such that the next shaped substrate may be bonded, for instance a flexible film or matched curvature substrate.

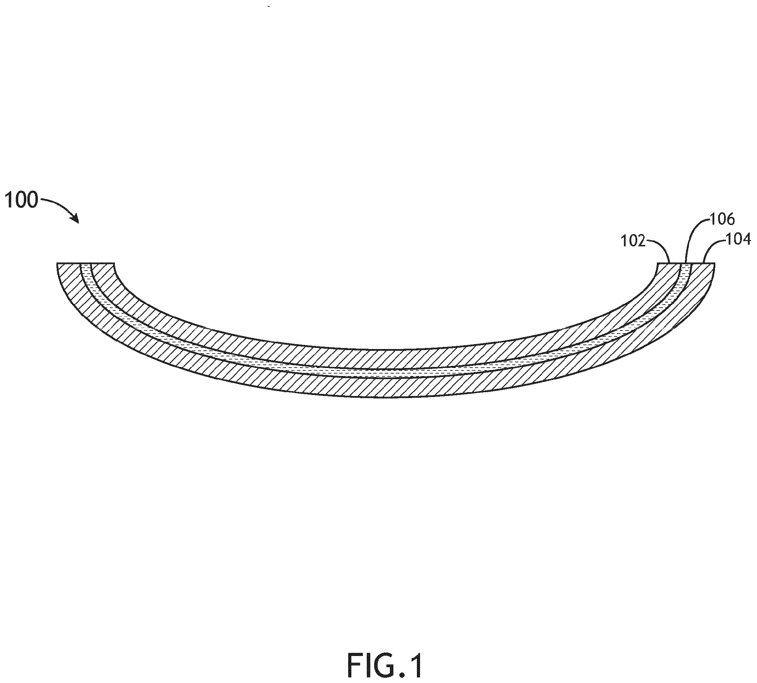

FIG. 1 is a schematic illustration of a bonded product produced according to a dry bonding lamination method according to the present disclosure. The product 100, for example an aircraft canopy, automotive windshield, automotive window, or other safety glass, generally includes a compound curve substrate 102 and a matched (e.g., shaped or optically) second substrate 104 bonded together by an intermediate optically clear adhesive (OCA) sheet 106. In some embodiments, each of the first substrate 102 and the second substrate 106 are compound curve substrates, having a matching curvature profile, provided in a bonded stack, i.e., rigid-to-rigid lamination or flexible-to-rigid lamination. In some embodiments, the product 100 includes additional substrates each bonded by a further intermediate OCA sheet or other adhesive interlayer. As used herein, the term "compound curve" means not planar and not single axis curved. For example, a compound curve may be normal or reverse curved.

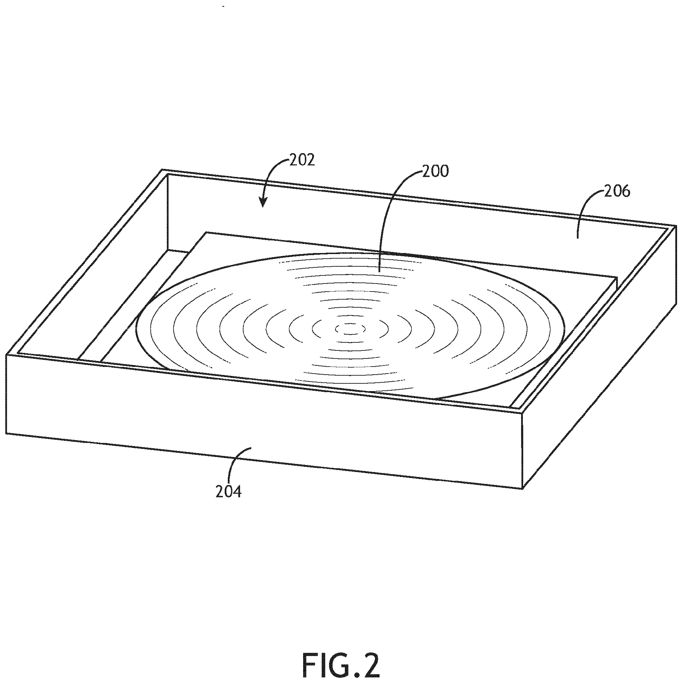

FIG. 2 is a schematic illustration of tooling suitable for implementing direct dry film (DDF) lamination methods according to the present disclosure. A non-planar substrate 200 is positioned in an interior space 202 formed within a frame 204 to be positioned in a DDF chamber. The frame 204 is configured to hold an OCA sheet 206 suspended above the non-planar substrate 200. The OCA sheet 206 includes a top removable liner structurally altered to induce flexibility in the sheet, and a bottom removable liner to be removed prior to bonding with the substrate 200. As discussed further below, the OCA sheet 206 is held suspended above the non-planar substrate 200 in order to be positioned to move down by contact from the deploying bladder, after evacuation, during the DDF cycle.

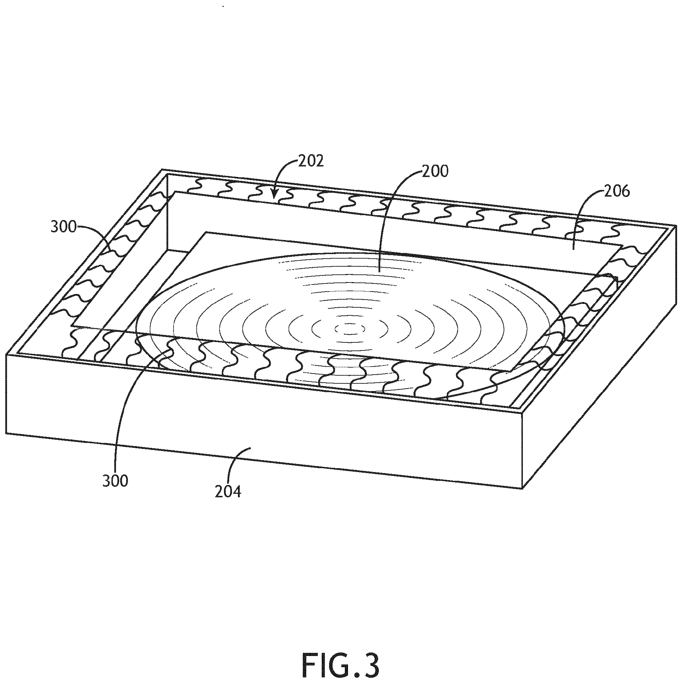

FIG. 3 is a schematic illustration of alternate tooling for implementing the direct dry film (DDF) lamination method according to the present disclosure. As in FIG. 2, a non-planar substrate 200 is positioned in the interior space 202 formed within a frame 204 to be positioned in the DDF chamber. The frame 204 is configured to hold an OCA sheet 206 suspended above the non-planar substrate 200. In this embodiment, the OCA sheet 206 may be attached at its peripheral edges to the frame 204 by a plurality of resiliently flexible members 300, for instance rubber bands, springs, or the like, configured to permit the OCA sheet 206 to move relative to the frame 204 to move down by contact with the deploying bladder, after evacuation, during the DDF cycle.

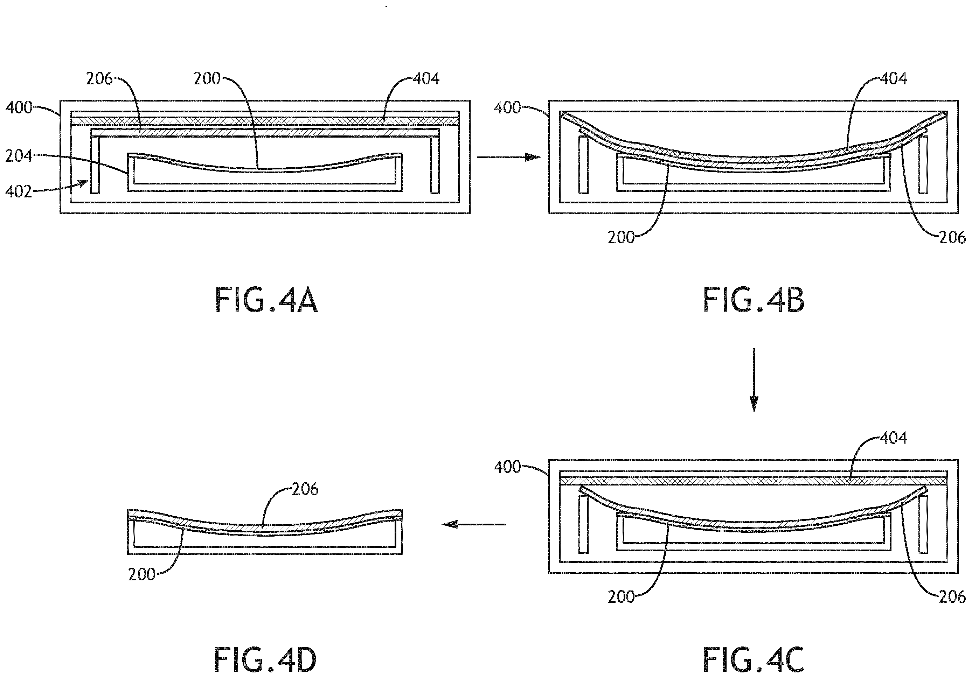

FIGS. 4A-D illustrate schematically suitable tooling and sequential steps for DDF laminating a compound curve substrate according to the present disclosure. The tooling includes a DDF chamber 400 forming an interior space 402 configured to be atmospherically controlled and evacuated. A flexible bladder 404 is provided within the interior space 402 and is configured to be selectively deployed and retracted. In use, the flexible bladder 404 deploys, such as with a controlled pressure differential, to move into contact with the OCA sheet 206 to thereby move the OCA sheet 206 into conformed contact with the underlying compound curve substrate 200. The compound curve substrate 200 is positioned within the bounds of the frame 204 and below the OCA sheet 206 suspended from above. In embodiments, the OCA sheet 206 may be dimensioned larger than the compound curve substrate 200 to ensure complete coverage of the bonding surface.

FIG. 4A shows the positional relationships of the DDF chamber 400, bladder 404, OCA sheet 206, and substrate 200 for bonding, and with the DDF chamber 400 evacuated. FIG. 4B shows the bladder 404 deployed, e.g., resiliently deformed, into contact with the OCA sheet 206 thereby moving the OCA sheet 206 into conformed contact with the highly curved bonding surface of the substrate 200. The conformed contact may be maintained for a predetermined time period to ensure adequate bonding with the surface of the substrate 200. FIG. 4C shows the bladder 404 retracted out of contact with the now conformed OCA sheet 206 bonded to the substrate 200, and with the DDF chamber 400 vented. FIG. 4D shows the substrate 200, having the bonded OCA sheet 206 applied thereto, removed from the DDF chamber for further processing, for instance bonding a flexible film or further compound curved part.

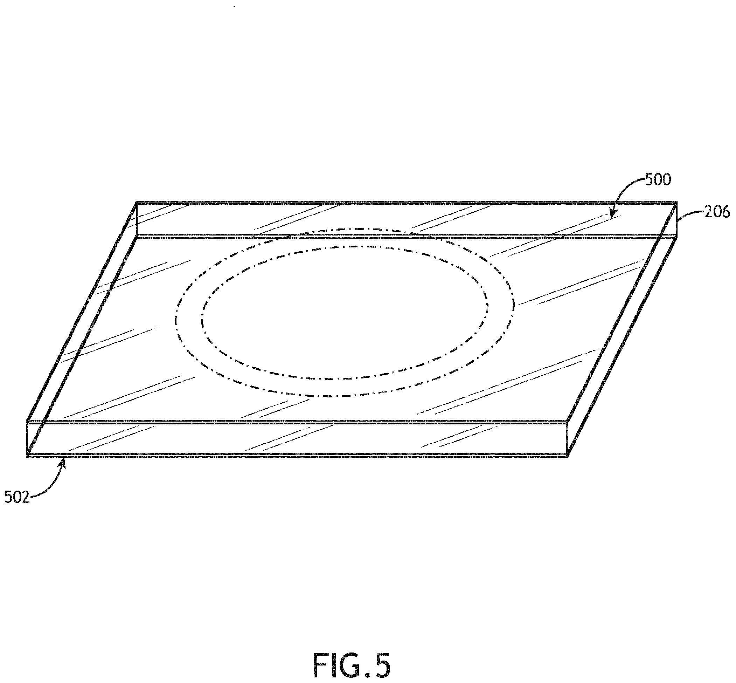

FIG. 5 shows a structurally altered top liner of an OCA sheet 206 to introduce flexibility to the sheet for facilitating conformity. In embodiments, the OCA sheet 206 includes a top and a bottom. As used herein, considering the figure orientations, the "top" refers to the sheet side facing away from the underlying substrate and the "bottom" refers to the sheet side facing the underlying substrate. The top is covered with a removable top liner 500 and the bottom is covered with a removable bottom liner 502. In use, the top and bottom liners 500, 502 maintain planarity and cleanliness of the OCA sheet 206 prior to bonding. The bottom liner 502 is removed prior to evacuating the DDF chamber. The top liner 500 remains in place during the DDF process.

The top liner 500 is shown having been structurally altered depending on the curvature of the substrate. Structural altering may include scoring, cutting, combinations of both, and the like for introducing a weakness in the top liner 500 to facilitate stretching the OCA sheet 206 during the conformed contact step. Structurally altering the top liner 500 allows the OCA sheet 206 to better conform to the curved shape of the substrate under the force of the deployed bladder. The locations of the structural altering may correspond to the curvature of the substrate such that a steeper substrate curve may require greater altering whereas a shallower curve or planar section of the substrate may require lesser altering.

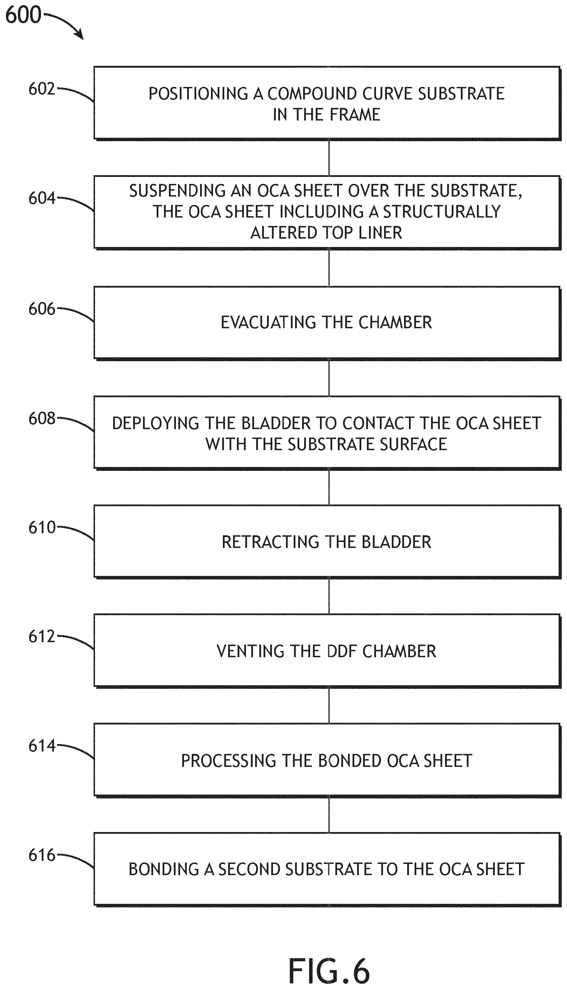

FIG. 6 illustrates an example implementation of a method 600 of DDF laminating a compound curve substrate. In general, operations of disclosed processes (e.g., method) may be performed in an arbitrary order, unless otherwise provided in the claims. The method may further include any step or operation implied or required by the product embodiments described herein. The products described above may also include any additional component or functionality expressed or implied by the method.

The method occurs in a DDF chamber including an interior space, a deployable bladder positioned in the interior space, and a frame positioned in the interior space beneath the deployable bladder, the frame configured to suspend an OCA sheet. At Step 602, the method includes a compound curve substrate in an interior space formed by the frame. At Step 604, the method includes suspending an OCA sheet, by the frame, over the to-be-bonded surface of the compound curve substrate. The OCA sheet may be altered in place, or previously altered outside of the DDF chamber to introduce a bending weakness in the OCA sheet corresponding to curvature of the underlying compound curve substrate.

With the compound curve substrate and the OCA sheet positioned for bonding, the method continues at Step 606 with evacuating the chamber to induce a vacuum, and Step 608 with deploying the bladder into contact with the OCA sheet to move the OCA sheet into conformed contact with the surface of the compound curve substrate to bond the OCA sheet to the surface. The conformed contact may be maintained for a predetermined time period, for instance a matter of seconds or minutes to ensure bonding. After bonding is ensured, the method continues at Step 610 with retracting the bladder and Step 612 with venting the DDF chamber.

With the OCA sheet already bonded to the surface of the compound curve substrate, at Step 614 the bonded OCA sheet may be further processed, such as trimmed and the top liner removed. At Step 616, a second substrate, for instance a flexible film or matching curved substrate, may be bonded to the top of the OCA sheet, for instance within the DDF chamber also via the deployable bladder.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

## Claims

1. A method of direct dry film, DDF, laminating a compound curve substrate (200), comprising:
providing a chamber (400) including a bladder (404);
positioning a frame (204) in the chamber (400), the frame (204) forming an interior space (202);
positioning a compound curve substrate (200) in the interior space (202);
suspending, by the frame (204), an optically clear adhesive, OCA, sheet over the compound curve substrate (200), the OCA sheet including a top liner (206);
structurally altering the top liner (206) at one or more locations corresponding to curvature of the compound curve substrate (200);
evacuating the chamber (400) to induce a vacuum;
deploying the bladder (404) into contact with the OCA sheet to move the OCA sheet into conformed contact with a surface of the compound curve substrate (200) to bond the OCA sheet to the surface;
retracting the bladder (404); and
venting the chamber (400),
wherein the OCA sheet further includes a bottom liner (500), and the method further comprises removing the bottom liner (500) prior to evacuating the chamber (400).

2. The method according to claim 1, wherein structurally altering the top liner (206) comprises scoring the top liner (206); and/or
wherein structurally altering the top liner (206) comprises cutting the top liner (206).

3. The method according to any preceding claim, further comprising:
positioning a second substrate (104) in the chamber (400);
evacuating the chamber (400) to induce a vacuum;
deploying the bladder (404) into contact with the second substrate to move the second substrate (104) into conformed contact with the OCA sheet;
retracting the bladder (404); and
venting the chamber (400).

4. The method according to any preceding claim, wherein the second substrate (104) is a flexible film or a rigid compound curve substrate (200) having a curvature profile matching a curvature profile of the compound curve substrate (200).

5. The method according to any preceding claim, further comprising, after venting the chamber (400):
trimming the OCA sheet bonded to the surface of the compound curve substrate (200); and
removing the top liner (206).

6. The method according to any preceding claim, wherein the OCA sheet is maintained in conformed contact with the compound curve substrate (200) for a predetermined time period; and/or
wherein the method further comprises heating at least one of the chamber, the OCA sheet, and the compound curve substrate; and/or
wherein the OCA sheet is coupled to the frame (204) by a plurality of elastic members.

## Patentansprüche

1. Verfahren zum direkten Trockenfilm-, DDF-, Laminieren eines Verbundkurvensubstrats (200), umfassend:
Bereitstellen einer Kammer (400), die eine Blase (404) einschließt;
Positionieren eines Rahmens (204) in der Kammer (400), wobei der Rahmen (204) einen Innenraum (202) ausbildet;
Positionieren eines Verbundkurvensubstrats (200) im Innenraum (202);
Aufhängen, durch den Rahmen (204), einer optisch klaren Klebstofffolie, OCA-Folie, über dem Verbundkurvensubstrat (200), wobei die OCA-Folie einen oberen Liner (206) einschließt;
strukturelles Verändern des oberen Liners (206) an einer oder mehreren Stellen, die einer Krümmung des Verbundkurvensubstrats (200) entsprechen;
Evakuieren der Kammer (400), um ein Vakuum zu induzieren;
Bringen der Blase (404) in Kontakt mit der OCA-Folie, um die OCA-Folie in formangepassten Kontakt mit einer Oberfläche des Verbundkurvensubstrats (200) zu bewegen, um die OCA-Folie mit der Oberfläche zu verbinden;
Zurückziehen der Blase (404); und
Belüften der Kammer (400),
wobei die OCA-Folie ferner einen unteren Liner (500) einschließt und das Verfahren ferner das Entfernen des unteren Liners (500) vor dem Evakuieren der Kammer (400) umfasst.

2. Verfahren nach Anspruch 1, wobei das strukturelle Verändern des oberen Liners (206) das Kerben des oberen Liners (206) umfasst; und/oder
wobei das strukturelle Verändern des oberen Liners (206) das Schneiden des oberen Liners (206) umfasst.

3. Verfahren nach einem der vorhergehenden Ansprüche, ferner umfassend:
Positionieren eines zweiten Substrats (104) in der Kammer (400);
Evakuieren der Kammer (400), um ein Vakuum zu induzieren;
Bringen der Blase (404) in Kontakt mit dem zweiten Substrat, um das zweite Substrat (104) in formangepassten Kontakt mit der OCA-Folie zu bewegen;
Zurückziehen der Blase (404); und
Belüften der Kammer (400).

4. Verfahren nach einem der vorhergehenden Ansprüche, wobei das zweite Substrat (104) eine flexible Folie oder ein starres Verbundkurvensubstrat (200) ist, das ein Krümmungsprofil aufweist, das einem Krümmungsprofil des Verbundkurvensubstrats (200) entspricht.

5. Verfahren nach einem der vorhergehenden Ansprüche, ferner umfassend, nach dem Belüften der Kammer (400):
Beschneiden der OCA-Folie, die mit der Oberfläche des Verbundkurvensubstrats (200) verbunden ist; und
Entfernen des oberen Liners (206).

6. Verfahren nach einem der vorhergehenden Ansprüche, wobei die OCA-Folie für einen vorbestimmten Zeitraum in formangepasstem Kontakt mit dem Verbundkurvensubstrat (200) gehalten wird; und/oder
wobei das Verfahren ferner das Erwärmen wenigstens eines der Kammer, der OCA-Folie und des Verbundkurvensubstrats umfasst; und/oder
wobei die OCA-Folie durch eine Vielzahl von elastischen Elementen mit dem Rahmen (204) gekoppelt ist.

## Revendications

1. Procédé de stratification de film sec directe (DDF) d'un substrat courbe composite (200), comprenant :
la fourniture d'une chambre (400) comportant une vessie (404) ;
le positionnement d'un cadre (204) dans la chambre (400), le cadre (204) formant un espace intérieur (202) ;
le positionnement d'un substrat courbe composite (200) dans l'espace intérieur (202) ;
la suspension, par le cadre (204), d'une feuille adhésive optiquement transparente, OCA, sur le substrat courbe composite (200), la feuille OCA comportant un revêtement supérieur (206) ;
la modification structurelle du revêtement supérieur (206) au niveau d'un ou de plusieurs emplacements correspondant à la courbure du substrat courbe composite (200) ;
l'évacuation de la chambre (400) pour induire un vide ;
le déploiement de la vessie (404) en contact avec la feuille OCA pour déplacer la feuille OCA en contact conforme avec une surface du substrat courbe composite (200) pour lier la feuille OCA à la surface ;
la rétractation de la vessie (404) ; et
la ventilation de la chambre (400),
dans lequel la feuille OCA comporte en outre un revêtement inférieur (500), et le procédé comprend également le retrait du revêtement inférieur (500) avant d'évacuer la chambre (400).

2. Procédé selon la revendication 1, dans lequel la modification structurelle du revêtement supérieur (206) comprend le rainurage du revêtement supérieur (206) ; et/ou
dans lequel la modification structurelle du revêtement supérieur (206) comprend la découpe du revêtement supérieur (206).

3. Procédé selon une quelconque revendication précédente, comprenant également :
le positionnement d'un second substrat (104) dans la chambre (400) ;
l'évacuation de la chambre (400) pour induire un vide ;
le déploiement de la vessie (404) en contact avec le second substrat pour déplacer le second substrat (104) en contact conforme avec la feuille OCA ;
la rétractation de la vessie (404) ; et
la ventilation de la chambre (400).

4. Procédé selon une quelconque revendication précédente, dans lequel le second substrat (104) est un film flexible ou un substrat courbe composite (200) rigide présentant un profil de courbure correspondant à un profil de courbure du substrat courbe composite (200).

5. Procédé selon une quelconque revendication précédente, comprenant également, après la ventilation de la chambre (400) :
l'ébavurage de la feuille OCA liée à la surface du substrat courbe composite (200) ; et
le retrait du revêtement supérieur (206).

6. Procédé selon une quelconque revendication précédente, dans lequel la feuille OCA est maintenue en contact conforme avec le substrat courbe composite (200) pendant une période de temps prédéterminée ; et/ou
dans lequel le procédé comprend également le chauffage d'au moins l'un des éléments suivants : la chambre, la feuille OCA et le substrat courbe composite ; et/ou
dans lequel la feuille OCA est couplée au cadre (204) par une pluralité d'éléments élastiques.
